# EUROPÄISCHE PATENTSCHRIFT

(11) **EP 4 347 722 B1**
(45) Veröffentlichungstag und Bekanntmachung des Hinweises auf die Patenterteilung: **25.11.2026**
(21) Anmeldenummer: 22731991.0
(22) Anmeldetag: 25.05.2022
(51) Int. Cl.: C09D 5/00

(54) **VERFAHREN ZUR HERSTELLUNG EINER LUMINESZENTEN DRUCKFARBE**
METHOD FOR MANUFACTURING A LUMINESCENT PRINTING INK
PROCÉDÉ DE FABRICATION D'UNE ENCRE D'IMPRESSION LUMINESCENTE

(30) Priorität: 27.05.2021 DE 102021002764
(43) Veröffentlichungstag der Anmeldung: 10.04.2024
(73) Patentinhaber: Giesecke+Devrient Currency Technology GmbH, 81677 München (DE)
(72) Erfinder: STOCK, Kai Uwe, 82031 Grünwald (DE)
(74) Vertreter: Giesecke+Devrient IP
(86) Internationale Anmeldenummer: PCT/EP2022/025242
(87) Internationale Veröffentlichungsnummer: WO 2022/248079

(56) Entgegenhaltungen:
- EP-A1- 0 330 733
- WO-A1-03/032242
- WO-A1-2017/134130
- CN-A- 1 699 506
- CN-A- 1 904 979
- CN-A- 103 694 774
- DE-A1- 102005 022 518

## Beschreibung

Die Erfindung betrifft ein Verfahren zur Herstellung einer lumineszenten Druckfarbe sowie ein Verfahren zur Erzeugung eines Lumineszenzfarbbilds mit einer oder mehreren solcher lumineszenten Druckfarben. Das Lumineszenzfarbbild kann insbesondere ein Sicherheitselement zur Absicherung eines Datenträgers, etwa eines Wertdokuments oder eines Ausweisdokuments darstellen.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. In diesem Zusammenhang ist es bekannt, Lumineszenzstoffe zur Absicherung von Wert- oder Ausweisdokumenten einzusetzen. Das Vorliegen der Lumineszenzstoffe kann dann beispielsweise mit Hilfe einer UV-Lampe geprüft werden.

Bei komplexeren Lumineszenzmerkmalen besteht oft der Wunsch, im Lumineszenzdruck eine oder mehrere vorgegebene Remissionsfarben zu reproduzieren. Beispielsweise kann gewünscht sein, ein vorgegebenes Remissionsfarbbild oder ein Objekt der realen Welt als Echtfarb-Lumineszenzdruck wiederzugeben. Die Druckschrift EP 1 013 463 B1 offenbart hierzu, auf einem Aufzeichnungsmedium ein erstes Farbfotoportraitbild vorzusehen, das mit Farbtinten aus Cyan, Magenta und Gelb aufgedruckt wird. Ein zweites Farbfotoportraitbild wird mit fluoreszierenden UV- oder IR-Tinten aus Rot, Grün und Blau aufgedruckt, wobei die Bilddaten des zweiten Farbfotoportraitbilds mit komplementären Farben zu den Bilddaten des ersten Farbfotoportraitbilds aufgedruckt werden, welche durch eine Umkehrung der Densitäten für die Farbtinten Cyan, Magenta und Gelb erhalten werden. Das zweite Farbfotoportraitbild weist dann weitgehend dieselbe Form und Farbe wie das erste Farbfotoportraitbild auf und kann zu dessen Bestätigung genutzt werden. Dieses Druckverfahren eignet sich jedoch nur für Rasterdruckverfahren, während im Wertdokumentdruck häufig auch andere Druckverfahren wie der Intaglio-Druck eingesetzt werden, und der gewünschte Farbeindruck durch Einsatz einer aus Grundfarben gemischten Druckfarbe erzielt wird. Darüber hinaus bleiben bei dem bekannten Verfahren Effekte durch eine Überdruckung mehrerer Druckfarben unberücksichtigt, so dass der Farbeindruck des resultierenden Lumineszenz-Portraitbildes, insbesondere auf einem farbigen Hintergrund, nur in eingeschränktem Maße dem des Remissions-Portraitbildes entspricht.

Die DE 10 2019 008 116 A1 zeigt einen Lumineszenzaufdruck, der teilweise mit einem Remissionsaufdruck überlappt. Der überlappende und der nicht überlappende Anteil haben den gleichen vorgegebenen Lumineszenz-Farbeindruck. Hier wird der vorgegebene Farbort durch Versuch und Irrtum mit mehreren Probeandrucken gefunden.

In WO 2017/134130 A1 wird zur Schaffung eines komplexen Sicherheitsmerkmals ein mit einem Produktträger gebildetes Wert- oder Sicherheitsprodukt bereitgestellt, wobei sich auf und/oder in dem Produktträger ein Sicherheitsdruck befindet. Der Sicherheitsdruck ist mit mindestens zwei unterschiedliche Farbeindrücke hervorrufenden Druckfarben C, M, Y und mit mindestens einer schwarz erscheinenden Druckfarbe K, K+ gebildet. Mindestens eine der mindestens zwei unterschiedliche Farbeindrücke hervorrufenden Druckfarben und der mindestens einen schwarz erscheinenden Druckfarbe K+ enthält jeweils einen IR-Absorber.

CN 103 694 774 A offenbart ein Verfahren zur Herstellung von UV-Nachtleuchtpasten mit hoher Helligkeit, welches zumindest die Schritte Druckfarbenherstellung, Siebdruck, UV-Verfestigung und Fertigstellen der Tagespaste umfasst. Die Nachthelligkeit des nachtleuchtenden Pasters des fertigen Produkts kann ISO17398-Niveau D oder nahezu E erreichen. Das Produkt ist ein Fertigprodukt ohne Grundmaterial mit ausgezeichneter Ebenheit und die Dicke kann je nach Bedarf bis zu etwa 1 cm betragen.

CN 1 904 979 A betrifft einen Umweltschutz-Werbekorb mit lichtspeichernder Selbstleuchtfunktion. Es gehört zum technischen Bereich der Herstellung umweltfreundlicher Werbekörbe mit lichtspeichernder, selbstleuchtender Druckfarbe. Er weist den folgenden technischen Hauptvorschlag auf: Der Werbekorb besteht aus einem Hauptkörper und einem Griff. Seine Besonderheit besteht darin, dass der Hauptkörper aus PVC-Kunststoff besteht und sich an seinen vorderen und hinteren Seitenflächen jeweils eine Werbeschicht und eine Schicht zum Verteilen von Gebotszeichen befinden. An seinen linken und rechten Flächen befindet sich jeweils eine Tasche. Die Werbeschicht und die Gebotszeichenschicht können tagsüber verschiedene sichtbare Lichtsorten absorbieren und speichern und abends leuchten. Und er kann für Menschen verwendet werden.

DE 10 2005 0225 18 A1 betrifft ein Sicherheitspapier für die Herstellung von Sicherheits- oder Wertdokumenten, wie Banknoten, Ausweiskarten und dergleichen, mit einem Bereich mit einem zwei- oder mehrstufigen Wasserzeichen. Zumindest im Bereich des Wasserzeichens ist ein unter UV-Strahlung lumineszierender Aufdruck aufgebracht, wobei das Sicherheitspapier für UV-Strahlung im Wesentlichen nur im Bereich des Wasserzeichens durchlässig ist.

EP 1 013 463 B1 offenbart ein Informationsaufzeichnungsmedium, bei dem persönliche Identifizierungsinformationen wie Buchstaben und ein erstes Farbfotoportraitbild zur persönlichen Identifizierung auf einer Oberfläche eines Substrats mit Farbtinte aus Cyan, Magenta und Gelb aufgezeichnet sind, was in einem sichtbaren Bestrahlungsbereich sichtbar ist. Dabei ist ein zweites Farbfotoportraitbild, welches das gleiche Muster wie das erste Farbfotoportaitbild hat, auf einem anderen Bereich auf der Oberfläche des Substrats als der Bereich des ersten Farbfotoportraitbilds durch Ultraviolett-Tinte oder Infrarot-Tinte aus Rot, Grün und Blau aufgezeichnet, die farblos und transparent in dem sichtbaren Bestrahlungsbereich ist, aber durch Bestrahlung mit Ultraviolett-Strahlen oder Infrarot-Strahlen Fluoreszenz abgibt. Das zweite Farbfotoportraitbild, das durch die Ultraviolett-Tinte oder Infrarot-Tinte aus Rot, Grün und Blau aufgezeichnet ist, ist ein Bild, das basierend auf Bilddaten mit komplementären Farben von Bilddaten aufgezeichnet ist, die erhalten worden sind, indem nur die Densitäten der Farben Cyan, Magenta und Gelb der Bilddaten des ersten Farbfotoportraitbilds, das durch die Farbtinte aus Cyan, Magenta und Gelb aufgezeichnet ist, umgekehrt werden.

In WO 03/032242 A1 wird eine Codierung, insbesondere einen Barcode, auf ein Substrat, insbesondere Banknote, im Stichtiefdruckverfahren aufgedruckt. Einzelne Codierungsbereiche unterscheiden sich in ihrer Farbschichtdicke. Die Druckfarbe enthält lumineszierende und/oder elektrisch leitfähige und/oder Röntgenstrahlen absorbierende und/oder infrarote Strahlung absorbierende Substanzen, so dass sich die unterschiedlichen Farbschichtdicken anhand unterschiedlicher Signalintensitäten differenzieren lassen.

CN 1699506 A offenbart ein abriebfreies, lang nachleuchtendes, lichtspeicherndes Material und ein Verfahren zu seiner Herstellung. Das Material hat die chemische Zusammensetzung aAl₂O₃.· bSrCO₃ ·cMeO · xEu₂O₃ · Dy₂O₃, wobei MeO ein oder mehrere Elemente ausgewählt aus Mg, Ca, Mn, Zn ist und a, b, c, x und y Molzahlen sind. Das Verhältnis von a und b liegt zwischen 0,8-2, wobei 0,01<=a<=5, 0,01<=b<=2, 0,01<=c<=0,5. 0,00001<=x<=1, 0,001<=y<=1. Das Dokument offenbart außerdem das Verfahren zu seiner Herstellung. Aus dem Material lassen sich wasserbasierte Lumineszenzdruckfarben, Leuchtfarben und Leuchtkeramiken herstellen.

EP 0 330 733 A1 offenbart ein Sicherheitselement in Form eines Fadens oder Bandes zur Einbettung in Sicherheitsdokumente wie Banknoten, Schecks, Wertpapiere, Identitäts-, Kreditkarten oder dergleichen mit im Durchlicht sichtbaren visuell und/oder maschinell lesbaren Zeichen, Muster etc. Das Sicherheitselement besteht aus einer lichtdurchlässigen Kunststofffolie, die eine sich über das Element erstreckende opake Beschichtung mit Aussparungen in Form der einzubringenden Zeichen und Muster aufweist. Außerdem enthält das Sicherheitselement in zu den Aussparungen deckungsgleichen Bereichen farbgebende und/oder lumineszierende Substanzen, durch die sich die Zeichen und/oder Muster unter geeigneten Lichtbedingungen vom Sicherheitsdokument und von der opaken Beschichtung in farblich kontrastierender Form unterscheiden.

Davon ausgehend liegt der Erfindung die Aufgabe zugrunde, ein Verfahren der eingangs genannten Art anzugeben, mit dem ein gewünschter Zielfarbort mit seinem Farbton und seiner Sättigung mit einer lumineszenten Druckfarbe optimal nachgebildet werden kann. Die Erfindung soll auch ein Verfahren zur Erzeugung eines Lumineszenzfarbbilds mit einer oder mehreren solcher lumineszenten Druckfarben bereitstellen.

Diese Aufgabe wird durch die Merkmale der unabhängigen Ansprüche 1 und 12, die die vorliegende Erfindung spezifizieren, gelöst. Weiterbildungen der Erfindung sind Gegenstand der abhängigen Ansprüche.

Gemäß der Erfindung wird bei einem Verfahren zur Herstellung einer lumineszenten Druckfarbe eines gewünschten Zielfarborts in einem Schritt Z) der gewünschte Zielfarbort mit Normfarbwertanteilen x, y vorgegeben.

In einem Schritt L) werden zumindest zwei, insbesondere zumindest drei, Lumineszenzpigmente mit ihren Lumineszenzspektren vorgegeben, in einem Schritt B) werden aus den Lumineszenzspektren der Lumineszenzpigmente, aus Spektralwertfunktionen, insbesondere CIE-Spektralwertfunktionen, und dem vorgegebenen Zielfarbort, insbesondere relative, Gewichtsanteile der zumindest zwei Lumineszenzpigmente bestimmt.

In einem Schritt M) werden schließlich die zumindest zwei Lumineszenzpigmente in den in Schritt B) bestimmten, insbesondere relativen, Gewichtsanteilen gemischt, um eine lumineszente Druckfarbe mit einer Lumineszenz zu erhalten, deren Farbort unter Beleuchtung mit nicht-sichtbarem Anregungslicht im Wesentlichen dem gewünschten Zielfarbort entspricht.

Bevorzugt werden mindestens, insbesondere genau, drei Lumineszenzpigmente verwendet, das heißt, in Schritt L) werden mindestens drei Lumineszenzpigmente mit ihren Lumineszenzspektren vorgegeben, in Schritt B) werden relative Gewichtsanteile der mindestens drei Lumineszenzpigmente bestimmt und in Schritt M) werden die mindestens drei Lumineszenzpigmente in den in Schritt B) bestimmten relativen Gewichtsanteilen gemischt. Auf diese Weise lassen sich eine Vielzahl von Farborten der Lumineszenz darstellen, die in einem flächigen Bereich der CIE-Normfarbtafel liegen.

Nicht-sichtbares Anregungslicht bedeutet im Rahmen dieser Beschreibung Licht außerhalb des sichtbaren Spektralbereichs von 380 nm bis 780 nm, konkret insbesondere UV-Licht im Spektralbereich von 10 nm bis 380 nm, vorzugsweise von 200 nm bis 380 nm, oder IR-Licht im Spektralbereich von 780 nm bis 30 µm, vorzugsweise von 780 nm bis 3000 nm. Eine UV-Anregung kann insbesondere im langwelligen UV bei einer Anregungswellenlänge von 365 nm oder im kurzwelligen UV bei einer Anregungswellenlänge von 254 nm erfolgen.

Der Begriff Lumineszenz umfasst im Rahmen dieser Beschreibung insbesondere Phosphoreszenz und Fluoreszenz, wobei die Anregung der Lumineszenz mit dem genannten, nicht-sichtbaren Anregungslicht erfolgt. Die genannten Lumineszenzpigmente sind vorzugsweise im sichtbaren Spektralbereich transparent.

Bei einer bevorzugten Verfahrensführung werden die Lumineszenzspektren der Lumineszenzpigmente und die Spektralwertfunktionen, insbesondere die CIE-Spektralwertfunktionen, jeweils als Vektor von n Intensitäten bei n festgelegten Wellenlängen vorgegeben. Weiter werden in Schritt B)
B1) aus den Normfarbwertanteilen x, y des vorgegebenen Zielfarborts Farbvalenzen X', Y' Z' bestimmt,
B2) wird eine Lumineszenzfarbmatrix aus den Lumineszenzspektren der Lumineszenzpigmente und den Spektralwertfunktionen, insbesondere den CIE-Spektralwertfunktionen, bestimmt,
B3) wird die Lumineszenzfarbmatrix invertiert, um eine inverse Lumineszenzfarbmatrix zu erhalten, und
B4) werden aus der inversen Lumineszenzfarbmatrix und den Farbvalenzen X', Y' Z' des vorgegebenen Zielfarborts die relativen Gewichtsanteile der zumindest zwei Lumineszenzpigmente bestimmt.

Diese Darstellung als Vektoren und Matrizen ermöglicht eine effiziente Bestimmung der relativen Gewichtsanteile mithilfe von Methoden aus der linearen Algebra.

Die Länge n des Spektralvektors kann beispielsweise mindestens n=10, insbesondere n=50 oder n=100 betragen. Die n festgelegten Wellenlängen können beispielsweise äquidistant im sichtbaren Spektralbereich zwischen 380 nm und 780 nm liegen.

Mit Vorteil wird bei dem Verfahren in Schritt M)
M1) eine Gesamtpigmentierung der Lumineszenzpigmente oder eine maximale Pigmentierung eines der Lumineszenzpigmente vorgegeben und werden damit aus den in Schritt B) bestimmten relativen Gewichtsanteilen die absoluten Gewichtsanteile der zumindest zwei Lumineszenzpigmente bestimmt, und
M2) werden die zumindest zwei Lumineszenzpigmente in den in Schritt M1) bestimmten absoluten Gewichtsanteilen gemischt und in einen Klarlack eingebracht, um die lumineszente Druckfarbe zu erhalten.

Auf diese Weise wird ermöglicht, dass die lumineszente Druckfarbe die für das gewünschte Druckverfahren nötigen Eigenschaften aufweist.

In einer vorteilhaften Weiterbildung des Verfahrens ist vorgesehen, dass
- in Schritt Z) neben dem gewünschten Zielfarbort ein gewünschter Toleranz-Farbabstand zu dem Zielfarbort vorgegeben wird,
- in Schritt B) unter weiterer Verwendung des vorgegebenen Toleranz-Farbabstands jeweils ein Toleranz-Gewichtsbereich für den relativen Gewichtsanteil jedes der zumindest zwei Lumineszenzpigmente bestimmt wird, und
- in Schritt M) die zumindest zwei Lumineszenzpigmente in Gewichtsanteilen gemischt werden, die jeweils innerhalb der Toleranz-Gewichtsbereiche für die Lumineszenzpigmente liegen, um eine lumineszente Druckfarbe mit einer Lumineszenz zu erhalten, deren Farbort unter Beleuchtung mit nicht-sichtbarem Anregungslicht innerhalb des vorgegebenen Toleranz-Farbabstands zu dem vorgegebenen Zielfarbort liegt.

Dies ermöglicht eine sicherere Prozessführung, da die nötige Dosier-Genauigkeit bekannt ist.

In Schritt B) wird daher neben den Lumineszenzspektren der Lumineszenzpigmente, den Spektralwertfunktionen, insbesondere den CIE-Spektralwertfunktionen, und dem vorgegebenen Zielfarbort auch der vorgegebene Toleranz-Farbabstand verwendet, um neben den relativen Gewichtsanteilen auch jeweils einen Toleranz-Gewichtsbereich für die zumindest zwei Lumineszenzpigmente zu bestimmen.

Dabei ist mit Vorteil weiter vorzugsweise vorgesehen, dass in Schritt B)
B0) aus dem vorgegebenen Zielfarbort und dem vorgegebenen Toleranz-Farbabstand, insbesondere unter Annahme gleicher Helligkeit, mindestens zwei, vorzugsweise mindestens vier, Grenzfarborte mit Normfarbwertanteilen xG , yG bestimmt werden,
B2) eine Lumineszenzfarbmatrix aus den Lumineszenzspektren der Lumineszenzpigmente und den Spektralwertfunktionen, insbesondere den CIE-Spektralwertfunktionen, bestimmt wird,
B3) die Lumineszenzfarbmatrix invertiert wird, um eine inverse Lumineszenzfarbmatrix zu erhalten,
und dass für jeden Grenzfarbort
B1') aus den Normfarbwertanteilen xG, yG des Grenzfarborts zugehörige Farbvalenzen X_{G}', Y_{G}' Z_{G}' bestimmt werden,
B4') aus der inversen Lumineszenzfarbmatrix und den bestimmten Farbvalenzen X_{G}', Y_{G}' Z_{G}' des Grenzfarborts zugehörige relative Gewichtsanteile der zumindest zwei Lumineszenzpigmente bestimmt werden,
   und dann
B5') aus den relativen Gewichtsanteilen der zumindest zwei Lumineszenzpigmente für die Grenzfarborte ein Toleranz-Gewichtsbereich für den relativen Gewichtsanteil jedes der zumindest zwei Lumineszenzpigmente bestimmt wird.

Auf diese Weise können die Toleranz-Gewichtsbereiche unter Berücksichtigung der visuellen Wahrnehmung am Zielfarbort sicher bestimmt werden.

Die Erfindung enthält auch ein Verfahren zur Erzeugung eines Lumineszenzfarbbilds, insbesondere eines mehrfarbigen Lumineszenzfarbbilds, bei dem
- für eine oder mehrere der in dem Lumineszenzfarbbild vorkommenden Lumineszenzfarben ein gewünschter Zielfarbort vorgegeben wird,
- für die vorgegebenen Zielfarborte jeweils eine lumineszente Druckfarbe mit einem Verfahren der oben beschriebenen Art hergestellt wird, und
- das Lumineszenzfarbbild unter Verwendung der hergestellten lumineszenten Druckfarben gedruckt wird.

Mit Vorteil wird bei dem Verfahren ein mehrfarbiges Remissionsfarbbild vorgegeben, das im sichtbaren Licht in verschiedenen Teilbereichen jeweils einen durch einen Farbort bestimmten Farbeindruck bzw. eine bestimmte Farbwirkung aufweist. Weiter wird ein Lumineszenzfarbbild erzeugt, das den Farbeindruck bzw. die Farbwirkung des Remissionsfarbbilds nachbildet, indem für die verschiedenen Teilbereiche jeweils der Farbort der Remissionsfarbe im sichtbaren Licht als gewünschter Zielfarbort für die Lumineszenzfarbe vorgeben wird.

Bevorzugt werden das Remissionsfarbbild mit Remissionsdruckfarben und das Lumineszenzfarbbild mit den hergestellten lumineszenten Druckfarben auf demselben Zieldatenträger aufgedruckt.

In einer bevorzugten Ausgestaltung wird das Lumineszenzfarbbild als Sicherheitselement zur Absicherung eines Datenträgers, insbesondere eines Wertdokuments oder eines Ausweisdokuments, auf den Datenträger aufgedruckt.

Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, ein Siegel, eine Steuerbanderole, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Das Lumineszenzfarbbild stellt vorzugsweise ein Portrait, eine realweltliche Darstellung, insbesondere eine Naturdarstellung, eine Landesflagge, oder ein anderes Hoheits- oder Ehrenzeichen, insbesondere eines Staates, dar. Bei derartigen Farbbildern ist eine korrekte Farbdarstellung besonders wichtig oder vorteilhaft.

Liegen ein Remissionsfarbbild und ein Lumineszenzfarbbild vor, so werden mit Vorteil beide Farbbilder auf dem Datenträger aufgedruckt, wobei das Lumineszenzfarbbild zur Absicherung des Datenträgers bei Beleuchtung mit Anregungslicht dasselbe Motiv zeigt und denselben Farbeindruck erzeugt wie das Remissionsfarbbild im sichtbaren Licht. Das Vorliegen des Lumineszenzfarbbilds und die farbtreue Nachbildung des Remissionsfarbbilds stellen ein leicht prüfbares, aber für Fälscher nur schwer nachstellbares Sicherheitsmerkmal dar.

Das Lumineszenzfarbbild kann eine 1:1-Kopie des Remissionsfarbbilds darstellen, es kann gegenüber dem Remissionsfarbbild allerdings auch vergrößert oder verkleinert sein. Das Lumineszenzfarbbild kann registergenau über dem Remissionsfarbbild aufgedruckt sein, oder teilweise mit dem Remissionsfarbbild überlappen oder ohne Überlapp in einem anderen Bereich des Datenträgers aufgedruckt sein. Insbesondere kann sich beim Umschalten von sichtbarem Licht zu Anregungslicht ein Bewegungseffekt ergeben.

Die Erfindung betrifft auch eine Druckfarbe, welche gemäß dem erfindungsgemäßen Verfahren zur Herstellung einer lumineszenten Druckfarbe erzeugt ist.

Ein weiterer Aspekt betrifft einen Datenträger, vorzugsweise ein Wertdokument, insbesondere eine Banknote, mit einem Aufdruck umfassend eine erfindungsgemäße Druckfarbe.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem mehrfarbigen Remissionsfarbbild und einem erfindungsgemäß hergestellten mehrfarbigen Lumineszenzfarbbild,
- Fig. 2: schematisch die kontinuierlichen Spektren dreier ausgewählter Lumineszenzpigmente für die Lumineszenz-Grundfarben Rot, Grün und Blau,
- Fig. 3: die kontinuierlichen Spektren der CIE-Spektralwertfunktionen für die Farben Rot, Grün und Blau,
- Fig. 4: eine Illustration des Toleranz-Farbabstands als Kreis im a*, b*-Koordinatensystem um einen Zielfarbort, und
- Fig. 5: für eine Ausgestaltung die erhaltenen absoluten Gewichtsanteile c_{G,abs}, c_{B,abs} der grünen und blauen Lumineszenzpigmente für den zum Zielfarbort gehörenden Mittelpunkt M und vier Grenzfarborte G1 bis G4.

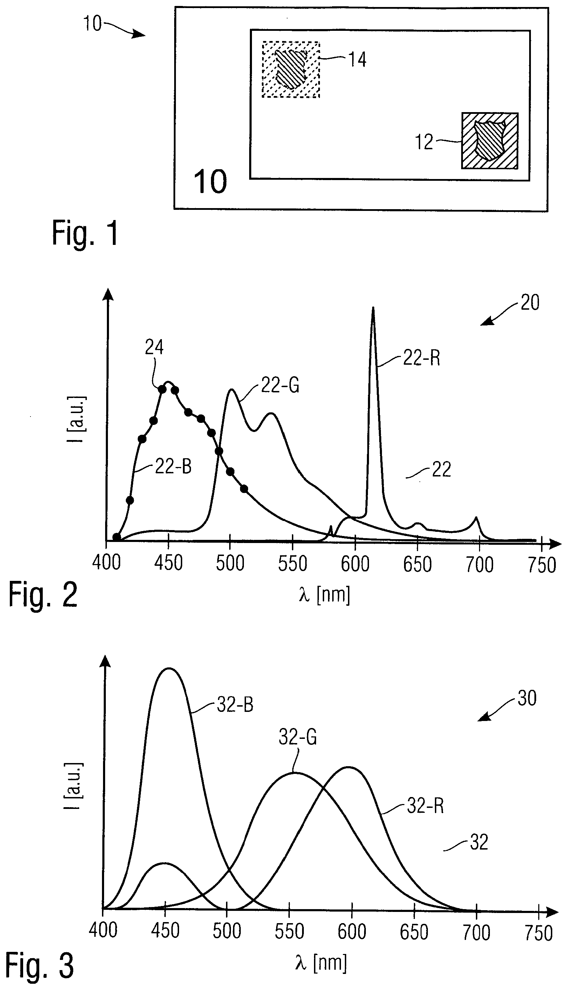

Die Erfindung wird nun am Beispiel eines lumineszenten Sicherheitselements für Banknoten erläutert. Figur 1 zeigt dazu eine schematische Darstellung einer Banknote 10 mit einem Aufdruck 12 in Form eines mehrfarbigen Remissionsfarbbilds, das bei normaler Beleuchtung im sichtbaren Licht erkennbar ist. Daneben enthält die Banknote 10 ein Sicherheitselement 14 in Form eines Lumineszenzfarbbilds, das im sichtbaren Licht nicht erkennbar ist, sondern nur bei Beleuchtung der Banknoten mit nicht-sichtbarem Anregungslicht, beispielsweise UV-Licht, in Erscheinung tritt.

Das Lumineszenzfarbbild 14 stellt dasselbe Motiv wie das Remissionsfarbbild 12 dar, wobei als Besonderheit die Lumineszenzdruckfarben des Lumineszenzfarbbilds 14 so gewählt sind, dass sie bei UV-Anregung denselben Farbeindruck erzeugen wie das Remissionsfarbbild 12 im sichtbaren Licht. Die verwendeten Lumineszenzdruckfarben enthalten dazu im Beispiel jeweils mindestens drei Lumineszenzpigmente, die in einem solchen relativen Anteil gemischt und in einen Klarlack eingebracht sind, dass die Lumineszenz der Lumineszenzdruckfarbe den Farbort, also den Farbton und die Sättigung, der jeweiligen Remissions-Zielfarbe optimal nachbildet.

Die Vorgehensweise bei der Herstellung geeigneter lumineszenter Druckfarben wird nachfolgend anhand der Nachbildung des Farborts einer vorgegebenen Remissionsfarbe erläutert. Für die weiteren Remissionsfarben eines Remissionsfarbbilds 12 kann entsprechend verfahren werden.

Die vorgegebene Remissionsfarbe kann einschließlich ihrer Helligkeit über die Normvalenzen X, Y und Z beschrieben werden, die etwa durch eine spektrophotometrische Messung bestimmt werden können. Eine solche Messung ist stets auf eine Normbeleuchtung bezogen, aus der sich auch die Weißreferenz ergibt. Für Lumineszenzfarben sind eine Normbeleuchtung und eine Weißreferenz allerdings nicht definiert, so dass die Normvalenzen X, Y, Z für Lumineszenzfarben nicht verwendet werden können.

Erfindungsgemäß wird diese Schwierigkeit dadurch umgangen, dass für die Nachbildung der Remissionsfarbe nicht auf die Normvalenzen, sondern auf die Normfarbwertanteile x, y und z zurückgegriffen wird, die durch $x = X / \left(X+Y+Z\right) , y = Y / \left(X+Y+Z\right) , z = Z / \left(X+Y+Z\right)$ definiert sind.

Die Normfarbwertanteile x und y beschreiben dabei den Farbort auf der Normfarbtafel. Da die Normfarbwertanteile nicht auf eine Weißreferenz bezogen sind, lassen sie sich auch zur Beschreibung von Lumineszenzfarben verwenden. Nachfolgend wird auf die Farbvalenzen X', Y', Z' ohne Normierung Bezug genommen, die proportional sowohl zu den Normvalenzen X, Y, Z, als auch zu den Normfarbwertanteilen x, y, z sind.

Im nächsten Schritt werden drei Lumineszenzpigmente für die Grundfarben Rot, Grün und Blau ausgewählt, die für die Nachbildung der vorgegebenen Remissionsfarbe verwendet werden sollen und deren Lumineszenzspektren bekannt sind. Im allgemeinen Fall werden nur zwei oder sogar k ≥ 3 Lumineszenzpigmente mit bestimmten Basislumineszenzfarben verwendet, der einfacheren Darstellung halber erfolgt die nachfolgende Erläuterung für den besonders relevanten Spezialfall k=3. Die Basislumineszenzfarben, die auch als Grundfarben bezeichnet werden, sind vorzugsweise Phosphoreszenzfarben, die unter sichtbarer Beleuchtung farblos sind und unter Beleuchtung mit Anregungslicht, insbesondere UV-Licht, sichtbar lumineszieren.

Spektren werden im Rahmen dieser Beschreibung jeweils als Vektor von n Intensitäten bei festgelegten Wellenlängen beschrieben. Die Spektralvektoren der drei ausgewählten Lumineszenz-Grundfarben können zu einer n x 3-Matrix zusammengefasst werden, der sogenannten Grundfarbmatrix R. Das Diagramm 20 der Fig. 2 zeigt schematisch die kontinuierlichen Spektren 22 der drei ausgewählten Lumineszenzpigmente für die Lumineszenz-Grundfarben Rot (22-R), Grün (22-G) und Blau (22-B). Bei dem Lumineszenzpigment für die Grundfarbe Blau ist zudem in der linken Diagrammhälfte angedeutet, wie aus den kontinuierlichen Spektren durch Diskretisierung ein diskretes Spektrum aus n Intensitäten 24 erhalten werden kann, das den genannten Spektralvektor bildet.

Der relative Gewichtsanteil der Lumineszenzpigmente für die Grundfarben Rot, Grün, Blau kann durch einen Dosierungsvektor c = (c_{R}, c_{G}, c_{B})^{T} beschrieben werden, wobei das Superskript T eine Transposition anzeigt, die es erlaubt, den Spaltenvektor c der kompakteren Darstellung halber als Zeilenvektor zu schreiben.

Mit dem Dosierungsvektor c kann das Mischspektrum S_{M} der aus dem Gemisch dieser drei Lumineszenzpigmente erhaltenen lumineszenten Druckfarbe durch Multiplikation der Grundfarbmatrix R mit dem Dosierungsvektor c bestimmt werden, also ${S}_{M} = R ⋅ c .$

Die Farbvalenzen X', Y', Z' der Mischfarbe können aus dem Mischspektrum S_{M} durch Zerlegung in die CIE- Spektralwertfunktionen, insbesondere gemäß DIN EN ISO 11664-1, erhalten werden. Dazu wird aus den drei CIE-Spektralwertfunktionen eine 3 x n-Matrix, die Normlichtempfindlichkeitsmatrix W gebildet, und das Mischspektrum S_{M} mit der Normlichtempfindlichkeitsmatrix W multipliziert. Die drei Spektralwertfunktionen 32 für die Farben Rot (32-R), Grün (32-G) und Blau (32-B) sind in dem Diagramm 30 der Fig. 3 dargestellt. Auch diese kontinuierlichen Spektren werden nach Diskretisierung jeweils durch einen Spektralvektor aus n Intensitäten dargestellt, so dass die drei Spektralwertfunktionen durch die genannte 3 x n-Normlichtempfindlichkeitsmatrix W dargestellt werden können.

Für die Farbvalenzen X', Y', Z' der Mischfarbe ergibt sich damit ${\left(X′,Y′,Z′\right)}^{T} = W ⋅ {S}_{M} = W ⋅ R ⋅ c .$ Nun wird die Lumineszenzfarbmatrix A := W · R definiert, die eine 3 x 3 - Matrix darstellt und die eine Beziehung zwischen dem Dosierungsvektor und den Farbvalenzen der Mischfarbe herstellt: ${\left(X′,Y′,Z′\right)}^{T} = A ⋅ c .$

Um nun umgekehrt ausgehend von den Farbvalenzen X', Y', Z' der vorgegebenen Remissionsfarbe den zugehörigen Dosierungsvektor und damit die erforderlichen Gewichtsanteile der drei Lumineszenzpigmente zu bestimmen, ist lediglich die letztgezeigte Matrixoperation zu invertieren. Hierzu wird die Lumineszenzfarbmatrix A invertiert, um die zugehörige inverse Lumineszenzfarbmatrix B = A⁻¹ zu erhalten, und es gilt $c = {A}^{- 1} ⋅ {\left(X′,Y′,Z′\right)}^{T} = B ⋅ {\left(X′,Y′,Z′\right)}^{T}$

Die in dem Dosierungsvektor c enthalten Komponenten c_{R}, c_{G}, c_{B} geben dann die relativen Gewichtsanteile an, in denen die drei ausgewählten Lumineszenzpigmente gemischt werden müssen, um eine lumineszente Druckfarbe mit einer Lumineszenz zu erhalten, deren Farbort bei Anregung gerade dem Zielfarbort, beispielsweise dem Farbort X', Y', Z' der vorgegebenen Remissionsfarbe, entspricht.

Um hieraus zu absoluten Gewichtsanteilen für die Pigmentierung einer Farbe zu gelangen, müssen die Gewichtsanteile c_{R}, c_{G}, c_{B} noch geeignet skaliert werden, beispielsweise durch Festlegung der Pigmentierung des in der höchsten Konzentration vorkommenden Lumineszenzpigments, oder durch Festlegung der Gesamtpigmentierung.

Beispielsweise kann sich konkret aus der Berechnung ein Dosierungsvektor mit c_{R} = 9,4, c_{G} = 5,6 und c_{B} = 1,0 für die Nachstellung einer vorgegeben Remissionsfarbe ergeben. Wird die Farbe mit der höchsten Konzentration auf eine gewünschte Pigmentierung gesetzt, hier beispielsweise das Lumineszenzpigment für die Farbe Rot auf c_{R,abs} = 5%, so können die anderen Pigmentierungen bestimmt werden zu: ${c}_{G , abs} = {c}_{G} * {c}_{R , abs} / {c}_{R} = 3 % ,$ und ${c}_{B , abs} = {c}_{B} * {c}_{R , abs} / {c}_{R} = 0 , 53 % .$

Die Lumineszenzpigmente für die Farben Rot, Grün und Blau werden dann in einem Anteil von 5%, 3% bzw. 0,53% in einen Klarlack eingebracht, um die gewünschte lumineszente Druckfarbe zu erhalten.

In einer anderen Variante kann eine gewünschte Gesamtpigmentierung c_{tot,abs} der lumineszenten Druckfarbe vorgegeben werden und aus dieser die erforderlichen Pigmentierungen der einzelnen Farben abgeleitet werden. Ist beispielsweise c_{tot,abs} = 10% vorgegeben, so erhält man mit cₜₒₜ = c_{R} + c_{G} + c_{B}: ${c}_{R , abs} = {c}_{R} * {c}_{tot , abs} / {c}_{tot} = 5 , 875 % ,$ ${c}_{G , abs} = {c}_{G} * {c}_{tot , abs} / {c}_{tot} = 3 , 5 % ,$ und ${c}_{B , abs} = {c}_{B} * {c}_{tot , abs} / {c}_{tot} = 0 , 625 % .$

Die drei ausgewählten Lumineszenzpigmente werden dann in den so ermittelten absoluten Gewichtsanteilen gemischt und in einen Klarlack eingebracht. Die so erhaltene lumineszente Druckfarbe ist im sichtbaren Licht bevorzugt transparent und luminesziert nach Anregung mit einer Lumineszenzfarbe, deren Farbort der vorgegebenen Remissionsfarbe entspricht.

Die beschriebene Vorgehensweise kann entsprechend für die anderen Remissionsfarben des Remissionsfarbbilds 12 durchgeführt werden, so dass ein Satz von Lumineszenzdruckfarben erhalten wird, deren Lumineszenz jeweils an dem Farbort der zugehörigen Remissionsfarbe liegt. Mit diesem Satz von Lumineszenzdruckfarben wird das Lumineszenzfarbbild 14 der Fig. 1 gedruckt und damit die gewünschte farbtreue Nachbildung des Remissionsfarbbilds 12 erreicht.

Sind im allgemeinen Fall mehr als 3 Basislumineszenzfarben vorgegeben, so kann das oben beschriebene Berechnungsschema entsprechend angepasst werden. Die Grundfarbmatrix R ist bei k vorgegeben Lumineszenzpigmenten im Allgemeinen eine n x k- Matrix und der Dosierungsvektor ist ein Spaltenvektor mit k Gewichtsanteilen cᵢ, i = 1...k für die k verschiedenen Lumineszenzpigmente. Die Berechnung erfolgt analog der obigen Beschreibung, lediglich bei der Inversion der Matrix A = W - R muss im Allgemeinen die Pseudoinverse B verwendet werden, um die Gewichtsanteile cᵢ aus den Farbvalenzen X', Y', Z' einer vorgegebenen Remissionsfarbe zu ermitteln.

Bei einer Weiterbildung der Erfindung wird zur Nachbildung des Farborts einer vorgegebenen Remissionsfarbe nicht nur ein bestimmter Dosierungsvektor berechnet, der den Farbort einer vorgegebenen Remissionsfarbe möglichst exakt nachbildet, sondern es wird zusätzlich ein Toleranz-Farbabstand ΔE vorgegeben, in dem der Farbeindruck der Lumineszenz der Lumineszenzdruckfarbe liegen soll.

Diese erweiterte Vorgehensweise trägt der Tatsache Rechnung, dass für einen menschlichen Betrachter nahe beieinanderliegende Farborte nicht oder fast nicht unterscheidbar sind. Durch Einbeziehung eines geeignet gewählten Toleranz-Farbabstands, beispielsweise ΔE = 1 oder ΔE = 3, kann daher eine Reproduzierbarkeit bei der Abmischung von Lumineszenzdruckfarben erreicht und sichergestellt werden, dass mehrere Abmischungen von Lumineszenzdruckfarben einen ununterscheidbaren Farbeindruck aufweisen.

Auf der anderen Seite kann dadurch auch sichergestellt werden, dass bei der Nachstellung einer vorgegebenen Remissionsfarbe durch eine Mischung von Lumineszenzpigmenten mit der Lumineszenzdruckfarbe ein visuell von dem Farbeindruck der Remissionsfarbe nicht unterscheidbarer Farbeindruck erhalten wird. Die Vorgabe eines einzuhaltenden Toleranz-Farbabstands erlaubt es, die Anforderungen an die Zusammensetzung der nachbildenden Lumineszenzdruckfarben zu quantifizieren und damit auch einer einfacheren Qualitätskontrolle zugänglich zu machen.

Bei Remissionsfarben kann die Unterscheidbarkeit von Farben bei gewählter Beleuchtung anhand des Farbabstands im CIELAB-Farbraum oder einem verwandten Farbraum, wie etwa dem DIN99-Farbraum, bewertet werden. Ist der Farbort einer Remissionsfarbe mit den Normvalenzen X, Y und Z vorgegeben, beispielsweise durch eine spektrophotometrische Messung, so können aus diesen Normvalenzen durch Transformation die Koordinaten L*, a*, b* des Farborts im CIELAB-Farbsystem berechnet werden. L* gibt dabei die Helligkeit der Farbe, a* die Farbart und Farbintensität zwischen Grün und Rot und b* die Farbart und Farbintensität zwischen Blau und Gelb an.

Der Farbunterschied ΔE zwischen zwei Farborten (L₁*, a₁*, b₁*) und (L₂*, a₂*, b₂*) ist im CIELAB-Farbraum durch $ΔE = √ \left({\left({{L}_{1}}^{∗}-{{L}_{2}}^{∗}\right)}^{2}+{\left({{a}_{1}}^{∗}-{{a}_{2}}^{∗}\right)}^{2}+{\left({{b}_{1}}^{∗}-{{b}_{2}}^{∗}\right)}^{2}\right)$ gegeben.

Dabei wird üblicherweise ein Farbunterschied ΔE ≤ 0,5 als nahezu unmerklich angesehen, ein Farbunterschied ΔE= 0,5 - 1,0 als für das geübte Auge bemerkbar, ein Farbunterschied ΔE= 1,0 - 2,0 als geringer Farbunterschied, ein Farbunterschied ΔE= 2,0 - 4,0 als wahrgenommener Farbunterschied, ein Farbunterschied ΔE= 4,0 - 5,0 als wesentlicher, selten tolerierter Farbunterschied und für ΔE ≥ 5,0 werden die beiden Farborte als zu unterschiedlichen Farben zugehörig bewertet.

Da die genannten Farbräume allerdings eine Einrechnung eines Weißpunktes der verwendeten Beleuchtung voraussetzen, können die angewendeten Methoden für die Bewertung der Unterscheidbarkeit von Lumineszenzfarben, für die kein Weißpunkt definiert ist, nicht eingesetzt werden.

Um diese Schwierigkeit zu umgehen, wird erfindungsgemäß insbesondere der Weg über die Normfarbwertanteile gegangen. Kurz zusammengefasst wird neben dem Farbort der nachzubildenden Remissionsfarbe in einem geeigneten Farbsystem, beispielsweise dem CIELAB oder DIN99-Farbsystem, auch ein Toleranz-Farbabstand ΔE vorgegeben, innerhalb dessen eine Farbe in der gewünschten Anwendung als mit dem Auge ununterscheidbar erachtet wird. Dann wird der durch den Toleranz-Farbabstand ΔE definierte Bereich um den Farbort der nachzubildenden Remissionsfarbe unter der Annahme gleicher Helligkeit in Normfarbwertanteile x, y transformiert. Der transformierte Bereich kann beispielsweise durch eine Mehrzahl von Grenzfarborten angegeben werden, die jeweils minimale bzw. maximale Koordinaten einer Richtung im Farbraum angeben. Aus diesen Grenzfarborten werden dann auf die oben beschriebene Weise zugehörige Dosierungsvektoren für die Gewichtsanteile der Lumineszenzpigmente bestimmt, und aus den Dosierungsvektoren der Grenzfarborte wird ein Toleranz-Gewichtsbereich für die Konzentration der Lumineszenzpigmente abgeleitet, innerhalb dessen Lumineszenz-Farbmischungen einen ununterscheidbaren Farbeindruck aufweisen.

Genauer kann die Bestimmung der Grenzfarborte für die Nachbildung einer vorgegebenen Remissionsfarbe unter Berücksichtigung eines vorgegebenen Toleranz-Farbabstands beispielsweise wie folgt vorgenommen werden:
Der Zielfarbort der Remissionsfarbe sei durch die Normfarbwertanteile x, y vorgegeben, der gewünschte Toleranz-Farbabstand sei ΔE. Dann sind die unnormierten Farbvalenzen des Zielfarborts durch $X ′ = x , Y ′ = y , Z ′ = 1 - x - y ,$ gegeben. Die Normierung erfolgt unter der üblichen Annahme, dass eine D50-Beleuchtung vorliegt, also eine Beleuchtung mit x(D50) = 0,3457 und y(D50) = 0,3585. Der Normierungsfaktor N ist dann durch N = 100/y(D50) gegeben und es gilt: $X = X ′ * N Y = Y ′ * N , Z = Z ′ * N .$

Wird der Toleranz-Farbabstand ΔE beispielsweise im CIELAB-System behandelt, so werden aus diesen Normvalenzen X, Y, Z, mit den bekannten Umrechnungsformeln die Koordinaten L₀*, a₀*, b₀* des Zielfarborts im CIELAB-Farbsystem berechnet. In diesen Koordinaten gilt für den Toleranz-Farbabstand $ΔE = √ \left({ΔL}^{∗ 2}+{Δa}^{∗ 2}+{Δb}^{∗ 2}\right) .$

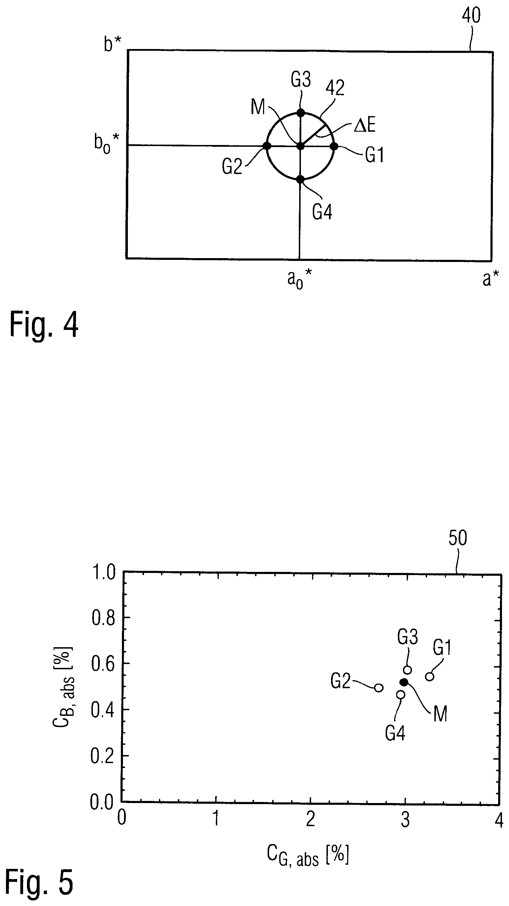

Da gleiche Helligkeit, also ΔL* = 0 angenommen wird, beschreibt der Toleranz-Farbabstand einen Kreis 42 im a*, b*-Koordinatensystem mit Radius ΔE um den Mittelpunkt M mit den Koordinaten (a₀*, b₀*), wie in dem Diagramm 40 der Fig. 4 illustriert.

Als Grenzfarborte G1 - G4 können beispielsweise vier Punkte auf dem Kreisumfang 42 gewählt werden, die die Extremwerte in der a* - bzw. b* - Koordinate aufweisen. Wählt man die Grenzfarborte auf diese Weise, so erhält man $G 1 : \left({{a}_{0}}^{∗}+ΔE, {{b}_{0}}^{∗}\right) , G 2 : \left({{a}_{0}}^{∗}-ΔE, {{b}_{0}}^{∗}\right) ,$ $G 3 : \left({{a}_{0}}^{∗},{{b}_{0}}^{∗}+ΔE\right) , G 4 : \left({{a}_{0}}^{∗},{{b}_{0}}^{∗}-ΔE\right) .$

Für eine genauere Eingrenzung des von dem Kreis 42 umschlossenen Bereichs können auch weitere Punkte auf dem Kreisumfang als zusätzliche Grenzfarborte gewählt werden, etwa entlang der Diagonalen der a*- b*-Ebene. Auch eine kontinuierliche Berechnung für den gesamten Kreisumfang ist möglich. In einer anderen Ausführungsform ist es möglich, nur zwei Grenzfarborte zu wählen, beispielsweise die oben genannten Punkte G1 und G3, was eine besonders schnelle Berechnung ermöglicht. Werden nur zwei Lumineszenzpigmente verwendet, bilden die durch deren Mischung darstellbaren Lumineszenz-Farbeindrücke eine Gerade in der a*-b*-Ebene, und als Grenzfarborte können beispielsweise die zwei Schnittpunkte dieser Gerade mit dem Kreis 42 gewählt werden.

Die Koordinaten der Grenzfarborte G1 bis G4 werden dann in den XYZ-Farbraum zurücktransformiert, wobei in die Berechnung wieder die angenommene D50-Beleuchtung eingeht. Mit den so gefundenen Normvalenzen werden die Normfarbwertanteile x, y, und aus diesen die unnormierten Farbvalenzen X', Y', Z' für die Grenzfarborte bestimmt.

Für jeden der Grenzfarborte G1 bis G4 wird dann wie oben für eine vorgegebene Remissionsfarbe beschrieben vorgegangen, um die zugehörigen Dosierungsvektoren zu ermitteln. Beispielsweise werden bei Vorgabe von drei Lumineszenzpigmenten für die Grundfarben Rot, Grün und Blau jeweils die relativen Gewichtsanteile c_{R} (G1), c_{G} (G1), c_{B}(G1), ... c_{R} (G4), c_{G} (G4), c_{B}(G4), ermittelt. Aus den Werten dieser Gewichtsanteile kann dann ein Toleranz-Gewichtsbereich für die drei Lumineszenzpigmente ${c}_{R} \left(min\right) - {c}_{R} \left(max\right) ,$ ${c}_{G} \left(min\right) - {c}_{G} \left(max\right) ,$ ${c}_{B} \left(min\right) - {c}_{B} \left(max\right) ,$ bestimmt werden.

Falls nur zwei Grenzfarborte aber mindestens drei Lumineszenzpigmente verwendet werden, können die Toleranz-Gewichtsbereiche beispielsweise symmetrisch um die Gewichtsanteile c_{R}, c_{G}, c_{B} des Zielfarborts (a₀*, b₀*) gewählt werden.

Als konkretes Beispiel soll beispielsweise der Farbeindruck einer orangen Remissionsfarbe mit (x, y) _{ziel} = (0,48, 0,35) mit einem Lumineszenzfarbsystem nachgebildet werden. Als Toleranz-Farbabstand wird ΔE = 1,0 vorgegeben, wobei der Toleranz-Farbabstand ΔE in diesem Ausführungsbeispiel im DIN99o-Farbsystem nach DIN 6176 behandelt wird.

Hierzu werden mit den bekannten Umrechnungsformeln zunächst die Koordinaten des Zielfarborts im DIN99o-Farbsystem ausgedrückt, mit dem Ergebnis ${\left({L}_{99 o}, {a}_{99 o}, {b}_{99 o}\right)}_{ziel} = \left(66,5193, 30,7571, 18,4952\right) .$

Im DIN99o-Farbsystem gilt für den Toleranz-Farbabstand $ΔE = √ \left({{ΔL}_{99 o}}^{2}+{{Δa}_{99 o}}^{2}+{{Δb}_{99 o}}^{∗ 2}\right) ,$ so dass bei Annahme gleicher Helligkeit, also ΔL₉₉ₒ = 0, der Toleranz-Farbabstand in der a₉₉ₒ-b₉₉ₒ -Ebene einen Kreis mit Radius ΔE = 1,0 um den Mittelpunkt (a₉₉ₒ, b₉₉ₒ)_{ziel} = (30,7571, 18,4952) beschreibt.

Werden als Grenzfarborte G1 - G4 die vier Punkte auf dem Kreisumfang gewählt, die die Extremwerte in der a₉₉ₒ - bzw. b₉₉ₒ - Koordinate aufweisen, so ergibt sich für die Koordinaten dieser Grenzfarborte:
G1: (66,5193, 30,7571+1, 18,4952) = (66,5193, 31,7571, 18,4952),
G2: (66,5193, 30,7571-1, 18,4952) = (66,5193, 29,7571, 18,4952),
G3: (66,5193, 30,7571, 18,4952+1) = (66,5193, 30,7571, 19,4952),
G4: (66,5193, 30,7571, 18,4952-1) = (66,5193, 30,7571, 17,4952).

Nach Rücktransformation der Koordinaten dieser Grenzfarborte G1 bis G4 in den XYZ-Farbraum erhält man für die Normfarbwertanteile x, y dieser Grenzorte:
G1: (0,496447, 0,354284),
G2: (0,484755, 0,359488),
G3: (0,495624, 0,359271),
G4: (0,485486, 0,354607).

Der zu dem Mittelpunkt des Kreises in der a₉₉ₒ-b₉₉ₒ -Ebene gehörige Farbort ist gerade der gewünschte Zielfarbort:
M: (0,48, 0,35).

Dann wird für die Grenzfarborte G1 bis G4 und den Mittelpunkt M jeweils der Dosierungsvektor c(G1) bis c(G4) bzw. c(M) mit den relativen Gewichtsanteilen der drei Lumineszenzpigmente bestimmt, wie oben beschrieben. Beispielsweise erhält man bei der Wahl der Lumineszenzpigmente P_{R}, P_{G}, P_{B} mit den in Fig. 2 schematisch gezeigten Spektren für die Grundfarben Rot, Grün und Blau die in Tabelle I angegebenen relativen Gewichtsanteile:

**Tabelle I:**

| | **c_{R}** | **c_{G}** | **c_{B}** |
|---|---|---|---|
| **M** | 9,42578 | 5,61483 | 1,0 |
| **G1** | 9,88737 | 5,36473 | 1,0 |
| **G2** | 8,99193 | 5,84185 | 1,0 |
| **G3** | 10,4769 | 6,17029 | 1,0 |
| **G4** | 8,54984 | 5,14565 | 1,0 |

Um zu absoluten Gewichtsanteilen für die Pigmentierung zu gelangen, werden die relativen Gewichtsanteile c_{R}, c_{G}, c_{B} noch geeignet skaliert. Beispielsweise kann zur Nachstellung der vorgegebenen orangen Remissionsfarbe die Pigmentierung des roten Lumineszenzpigments P_{R} auf c_{R,abs} = 5% festgelegt werden. Damit können dann die Pigmentierungen der grünen und blauen Lumineszenzpigmente P_{G} und P_{B} bestimmt werden, wie oben erläutert.

Figur 5 zeigt im Diagramm 50 die erhaltenen absoluten Gewichtsanteile c_{G,abs}, c_{B,abs} der grünen und blauen Lumineszenzpigmente P_{G} und P_{B} für den Mittelpunkt M und die vier Grenzfarborte G1 bis G4. Der Gewichtsanteil c_{R,abs} des roten Lumineszenzpigments beträgt durch die vorgenommene Festlegung jeweils 5%.

In einem Praxistest wurden mit den so bestimmten absoluten Gewichtsanteilen fünf Lumineszenzdruckfarben entsprechend den Werten des Mittelpunkts M und der Grenzfarborte G1 bis G4 gemischt und ein Druckmuster mit den fünf Lumineszenzdruckfarben erstellt. Bei Anregung mit UV-Licht erzeugen die fünf Lumineszenzdruckfarben alle sehr ähnliche, mit bloßem Auge praktisch nicht unterscheidbare Lumineszenzfarbeindrücke.

### Bezugszeichenliste

- 10: Banknote
- 12: Aufdruck Remissionsfarbbild
- 14: Sicherheitselement Lumineszenzfarbbild
- 20: Diagramm
- 22,: Spektren Lumineszenzpigmente
- 22-R, 22-G, 22-B: Spektrum Rot, Grün, Blau
- 24: Intensitäten
- 30: Diagramm
- 32: Spektralwertfunktionen
- 32-R, 32-G, 32-B: Spektralwertfunktionen Rot, Grün, Blau
- 40: Diagramm
- 42: Kreis im a*, b*-Koordinatensystem
- 50: Diagramm
- M: Mittelpunkt
- G1, G2, G3, G4: Grenzfarborte
- ΔE: Toleranz-Farbabstand

## Patentansprüche

1. Verfahren zur Herstellung einer lumineszenten Druckfarbe eines gewünschten Zielfarborts, bei dem
Z) der gewünschte Zielfarbort, einschließlich Farbton und Sättigung, mit Normfarbwertanteilen x, y vorgegeben wird, wobei die Normfarbwertanteile den Farbort auf einer Normfarbtafel beschreiben,
L) zumindest zwei Lumineszenzpigmente der Grundfarben Rot, Grün und Blau mit bekannten Lumineszenzspektren vorgegeben werden,
B) aus den Lumineszenzspektren der Lumineszenzpigmente, aus Spektralwertfunktionen und dem vorgegebenen Zielfarbort Gewichtsanteile der zumindest zwei Lumineszenzpigmente bestimmt werden, und
M) die zumindest zwei Lumineszenzpigmente in den in Schritt B) bestimmten Gewichtsanteilen gemischt werden, um eine lumineszente Druckfarbe mit einer Lumineszenz zu erhalten, deren Farbort unter Beleuchtung mit nicht-sichtbarem Anregungslicht im Wesentlichen dem gewünschten Zielfarbort entspricht.

2. Verfahren nach Anspruch 1, **dadurch gekennzeichnet, dass** in Schritt L) mindestens, insbesondere genau, drei Lumineszenzpigmente vorgegeben werden.

3. Verfahren nach Anspruch 1 oder 2, **dadurch gekennzeichnet, dass** die Lumineszenzspektren der Lumineszenzpigmente und die Spektralwertfunktionen jeweils als Vektor von n Intensitäten bei n festgelegten Wellenlängen vorgegeben werden, und dass in Schritt B)
B1) aus den Normfarbwertanteilen x, y des vorgegebenen Zielfarborts Farbvalenzen X', Y' Z' bestimmt werden,
B2) eine Lumineszenzfarbmatrix aus den Lumineszenzspektren der Lumineszenzpigmente und den Spektralwertfunktionen bestimmt wird,
B3) die Lumineszenzfarbmatrix invertiert wird, um eine inverse Lumineszenzfarbmatrix zu erhalten, und
B4) aus der inversen Lumineszenzfarbmatrix und den Farbvalenzen X', Y' Z' des vorgegebenen Zielfarborts die relativen Gewichtsanteile der zumindest zwei Lumineszenzpigmente bestimmt werden.

4. Verfahren nach einem der vorherigen Ansprüche, **dadurch gekennzeichnet, dass** in Schritt M)
M1) eine Gesamtpigmentierung der Lumineszenzpigmente oder eine maximale Pigmentierung eines der Lumineszenzpigmente vorgegeben wird und damit aus den in Schritt B) bestimmten relativen Gewichtsanteilen die absoluten Gewichtsanteile der zumindest zwei Lumineszenzpigmente bestimmt werden, und
M2) die zumindest zwei Lumineszenzpigmente in den in Schritt M1) bestimmten absoluten Gewichtsanteilen gemischt und in einen Klarlack eingebracht werden, um die lumineszente Druckfarbe zu erhalten.

5. Verfahren nach wenigstens einem der Ansprüche 1 bis 4, **dadurch gekennzeichnet, dass**
- in Schritt Z) neben dem gewünschten Zielfarbort ein gewünschter Toleranz-Farbabstand zu dem Zielfarbort vorgegeben wird,
- in Schritt B) unter weiterer Verwendung des vorgegebenen Toleranz-Farbabstands jeweils ein Toleranz-Gewichtsbereich für den relativen Gewichtsanteil jedes der zumindest zwei Lumineszenzpigmente bestimmt wird, und
- in Schritt M) die zumindest zwei Lumineszenzpigmente in Gewichtsanteilen gemischt werden, die jeweils innerhalb der Toleranz-Gewichtsbereiche für die Lumineszenzpigmente liegen, um eine lumineszente Druckfarbe mit einer Lumineszenz zu erhalten, deren Farbort unter Beleuchtung mit nicht-sichtbarem Anregungslicht innerhalb des vorgegebenen Toleranz-Farbabstands zu dem vorgegebenen Zielfarbort liegt.

6. Verfahren nach Anspruch 5, **dadurch gekennzeichnet, dass** in Schritt B) B0) aus dem vorgegebenen Zielfarbort und dem vorgegebenen Toleranz-Farbabstand mindestens zwei, vorzugsweise mindestens vier Grenzfarborte mit Normfarbwertanteilen xG, yG bestimmt werden,
B2) eine Lumineszenzfarbmatrix aus den Lumineszenzspektren der Lumineszenzpigmente und den Spektralwertfunktionen bestimmt wird,
B3) die Lumineszenzfarbmatrix invertiert wird, um eine inverse Lumineszenzfarbmatrix zu erhalten,
und für jeden Grenzfarbort
B1') aus den Normfarbwertanteilen xG, yG des Grenzfarborts zugehörige Farbvalenzen X_{G}', Y_{G}' Z_{G}' bestimmt werden,
B4') aus der inversen Lumineszenzfarbmatrix und den bestimmten Farbvalenzen X_{G}', Y_{G}' Z_{G}' des Grenzfarborts zugehörige relative Gewichtsanteile der zumindest zwei Lumineszenzpigmente bestimmt werden,
und dann
B5') aus den relativen Gewichtsanteilen der zumindest zwei Lumineszenzpigmente für die Grenzfarborte ein Toleranz-Gewichtsbereich für den relativen Gewichtsanteil jedes der zumindest zwei Lumineszenzpigmente bestimmt wird.

7. Verfahren zur Erzeugung eines Lumineszenzfarbbilds, insbesondere eines mehrfarbigen Lumineszenzfarbbilds, bei dem
- für eine oder mehrere der in dem Lumineszenzfarbbild vorkommenden Lumineszenzfarben ein gewünschter Zielfarbort vorgegeben wird,
- für die vorgegebenen Zielfarborte jeweils eine lumineszente Druckfarben mit einem Verfahren nach einem der Ansprüche 1 bis 5 hergestellt wird, und
- das Lumineszenzfarbbild unter Verwendung der hergestellten lumineszenten Druckfarben gedruckt wird.

8. Verfahren nach Anspruch 7, **dadurch gekennzeichnet, dass**
- ein mehrfarbiges Remissionsfarbbild vorgegeben wird, das im sichtbaren Licht in verschiedenen Teilbereichen jeweils eine durch einen Farbort bestimmte Farbwirkung aufweist, und dass
- ein Lumineszenzfarbbild erzeugt wird, das die Farbwirkung des Remissionsfarbbilds nachbildet, indem für die verschiedenen Teilbereiche jeweils der Farbort der Remissionsfarbe im sichtbaren Licht als gewünschter Zielfarbort für die Lumineszenzfarbe vorgeben wird.

9. Verfahren nach Anspruch 8, **dadurch gekennzeichnet, dass** das Remissionsfarbbild mit Remissionsdruckfarben und das Lumineszenzfarbbild mit den hergestellten lumineszenten Druckfarben auf demselben Zieldatenträger aufgedruckt werden.

10. Verfahren nach einem der Ansprüche 7 bis 9, **dadurch gekennzeichnet, dass** das Lumineszenzfarbbild als Sicherheitselement zur Absicherung eines Datenträgers, insbesondere eines Wertdokuments oder eines Ausweisdokuments, auf den Datenträger aufgedruckt wird.

11. Verfahren nach Anspruch 9 und 10, **dadurch gekennzeichnet, dass** das Remissionsfarbbild und das Lumineszenzfarbbild auf dem Datenträger aufgedruckt werden, wobei das Lumineszenzfarbbild zur Absicherung des Datenträgers bei Beleuchtung mit Anregungslicht dasselbe Motiv zeigt und denselben Farbeindruck erzeugt wie das Remissionsfarbbild im sichtbaren Licht.

12. Druckfarbe nach einem Verfahren gemäß Anspruch 2, wobei der relative Gewichtsanteil der Lumineszenzpigmente für die Grundfarben Rot, Grün, Blau durch einen Dosierungsvektor c = (c_{R},c_{G},c_{B})^{T} beschrieben wird, wobei die Komponenten des Dosierungsvektors c_{R},c_{G},c_{B} die relativen Gewichtsanteile angeben, in denen die mindestens drei Lumineszenzpigmente gemischt werden.

## Claims

1. Method for producing a luminescent printing ink of a desired target color point, in which
Z) the desired target color point, including hue and saturation, is predetermined with standard chromaticity coordinates x, y, wherein the standard chromaticity coordinates describe the color point on a standard chromaticity diagram,
L) at least two luminescent pigments of the primary colors red, green and blue with known luminescence spectra are predetermined,
B) weight fractions of the at least two luminescent pigments are determined from the luminescence spectra of the luminescent pigments, from spectral value functions and from the predetermined target color point, and
M) the at least two luminescent pigments are mixed in the weight fractions determined in step B), in order to obtain a luminescent printing ink with a luminescence whose color point under illumination with non-visible excitation light substantially corresponds to the desired target color point.

2. Method according to claim 1, **characterized in that** in step L) at least, in particular exactly, three luminescent pigments are predetermined.

3. Method according to claim 1 or 2, **characterized in that** the luminescence spectra of the luminescent pigments and the spectral value functions are each predetermined as a vector of n intensities at n defined wavelengths, and **in that** in step B)
B1) tristimulus values X', Y', Z' are determined from the standard chromaticity coordinates x, y of the predetermined target color point,
B2) a luminescence color matrix is determined from the luminescence spectra of the luminescent pigments and the spectral value functions, in particular the CIE spectral value functions,
B3) the luminescence color matrix is inverted in order to obtain an inverse luminescence color matrix, and
B4) the relative weight fractions of the at least two luminescent pigments are determined from the inverse luminescence color matrix and the tristimulus values X', Y', Z' of the predetermined target color point.

4. Method according to one of the preceding claims, **characterized in that** in step M)
M1) a total pigmentation of the luminescent pigments or a maximum pigmentation of one of the luminescent pigments is predetermined, and the absolute weight fractions of the at least two luminescent pigments are thereby determined from the relative weight fractions determined in step B), and
M2) the at least two luminescent pigments are mixed in the absolute weight fractions determined in step M1) and introduced into a clear varnish, in order to obtain the luminescent printing ink.

5. Method according to at least one of claims 1 to 4, **characterized in that**
• in step Z), in addition to the desired target color point, a desired tolerance color distance to the target color point is predetermined,
• in step B), using the predetermined tolerance color distance, a tolerance weight range is respectively determined for the relative weight fraction of each of the at least two luminescent pigments, and
• in step M), the at least two luminescent pigments are mixed in weight fractions each lying within the tolerance weight ranges for the luminescent pigments, in order to obtain a luminescent printing ink with a luminescence whose color point under illumination with non-visible excitation light lies within the predetermined tolerance color distance to the predetermined target color point.

6. Method according to claim 5, **characterized in that** in step B) B0) at least two, preferably at least four, boundary color points with standard chromaticity coordinates xG, yG are determined from the predetermined target color point and the predetermined tolerance color distance,
B2) a luminescence color matrix is determined from the luminescence spectra of the luminescent pigments and the spectral value functions, in particular the CIE spectral value functions,
B3) the luminescence color matrix is inverted in order to obtain an inverse luminescence color matrix,
and for each boundary color point
B1') associated tristimulus values XG', YG', ZG' are determined from the standard chromaticity coordinates xG, yG of the boundary color point,
B4') associated relative weight fractions of the at least two luminescent pigments are determined from the inverse luminescence color matrix and the determined tristimulus values XG', YG', ZG' of the boundary color point,
and then
B5') a tolerance weight range for the relative weight fraction of each of the at least two luminescent pigments is determined from the relative weight fractions of the at least two luminescent pigments for the boundary color points.

7. Method for producing a luminescence color image, in particular a multicolored luminescence color image, in which
• a desired target color point is predetermined for one or more of the luminescent colors occurring in the luminescence color image,
• a luminescent printing ink is respectively produced for the predetermined target color points by a method according to one of claims 1 to 5, and
• the luminescence color image is printed using the produced luminescent printing inks.

8. Method according to claim 7, **characterized in that**
• a multicolored reflection color image is predetermined, which, under visible light, has in different partial areas respectively a color effect determined by a color point, and **in that**
• a luminescence color image is produced which reproduces the color effect of the reflection color image, **in that** for the different partial areas the color point of the reflection color under visible light is respectively predetermined as the desired target color point for the luminescent color.

9. Method according to claim 8, **characterized in that** the reflection color image is printed with reflection printing inks and the luminescence color image is printed with the produced luminescent printing inks on the same target data carrier.

10. Method according to one of claims 7 to 9, **characterized in that** the luminescence color image is printed onto the data carrier as a security element for securing a data carrier, in particular a security document or an identity document.

11. Method according to claims 9 and 10, **characterized in that** the reflection color image and the luminescence color image are printed on the data carrier, wherein the luminescence color image, for securing the data carrier upon illumination with excitation light, shows the same motif and produces the same color impression as the reflection color image under visible light.

12. Printing ink according to a method according to claim 2, wherein the relative weight fraction of the luminescent pigments for the primary colors red, green, blue is described by a dosing vector c = (cR,cG,cB)T, wherein the components of the dosing vector cR,cG,cB indicate the relative weight fractions in which the at least three luminescent pigments are mixed.

## Revendications

1. Procédé de fabrication d'une encre d'impression luminescente d'un lieu de couleur cible souhaité, dans lequel
Z) le lieu de couleur cible souhaité, incluant la teinte et la saturation, est prédéfini avec des coordonnées trichromatiques normalisées x, y, les coordonnées trichromatiques normalisées décrivant le lieu de couleur sur un diagramme de chromaticité normalisé,
L) au moins deux pigments luminescents des couleurs fondamentales rouge, vert et bleu avec des spectres de luminescence connus sont prédéfinis,
B) à partir des spectres de luminescence des pigments luminescents, de fonctions de valeurs spectrales et du lieu de couleur cible prédéfini, des proportions pondérales des au moins deux pigments luminescents sont déterminées, et
M) les au moins deux pigments luminescents sont mélangés dans les proportions pondérales déterminées à l'étape B), afin d'obtenir une encre d'impression luminescente avec une luminescence dont le lieu de couleur sous éclairage par une lumière d'excitation non visible correspond essentiellement au lieu de couleur cible souhaité.

2. Procédé selon la revendication 1, **caractérisé en ce qu'**à l'étape L) au moins, notamment exactement, trois pigments luminescents sont prédéfinis.

3. Procédé selon la revendication 1 ou 2, **caractérisé en ce que** les spectres de luminescence des pigments luminescents et les fonctions de valeurs spectrales sont chacun prédéfinis sous forme d'un vecteur de n intensités à n longueurs d'onde déterminées, et **en ce qu'**à l'étape B)
B1) à partir des coordonnées trichromatiques normalisées x, y du lieu de couleur cible prédéfini, des valeurs colorimétriques X', Y', Z' sont déterminées,
B2) une matrice de couleur de luminescence est déterminée à partir des spectres de luminescence des pigments luminescents et des fonctions de valeurs spectrales, notamment des fonctions de valeurs spectrales CIE,
B3) la matrice de couleur de luminescence est inversée pour obtenir une matrice de couleur de luminescence inverse, et
B4) à partir de la matrice de couleur de luminescence inverse et des valeurs colorimétriques X', Y', Z' du lieu de couleur cible prédéfini, les proportions pondérales relatives des au moins deux pigments luminescents sont déterminées.

4. Procédé selon l'une des revendications précédentes, **caractérisé en ce qu'**à l'étape M)
M1) une pigmentation totale des pigments luminescents ou une pigmentation maximale d'un des pigments luminescents est prédéfinie et, à partir de celle-ci, les proportions pondérales absolues des au moins deux pigments luminescents sont déterminées à partir des proportions pondérales relatives déterminées à l'étape B), et
M2) les au moins deux pigments luminescents sont mélangés dans les proportions pondérales absolues déterminées à l'étape M1) et incorporés dans un vernis transparent, afin d'obtenir l'encre d'impression luminescente.

5. Procédé selon au moins l'une des revendications 1 à 4, **caractérisé en ce que**
• à l'étape Z), outre le lieu de couleur cible souhaité, un écart de couleur de tolérance souhaité par rapport au lieu de couleur cible est prédéfini,
• à l'étape B), en utilisant en outre l'écart de couleur de tolérance prédéfini, une plage pondérale de tolérance est respectivement déterminée pour la proportion pondérale relative de chacun des au moins deux pigments luminescents, et
• à l'étape M), les au moins deux pigments luminescents sont mélangés dans des proportions pondérales se situant respectivement à l'intérieur des plages pondérales de tolérance pour les pigments luminescents, afin d'obtenir une encre d'impression luminescente avec une luminescence dont le lieu de couleur sous éclairage par une lumière d'excitation non visible se situe à l'intérieur de l'écart de couleur de tolérance prédéfini par rapport au lieu de couleur cible prédéfini.

6. Procédé selon la revendication 5, **caractérisé en ce qu'**à l'étape B) B0) à partir du lieu de couleur cible prédéfini et de l'écart de couleur de tolérance prédéfini, au moins deux, de préférence au moins quatre lieux de couleur limites avec des coordonnées trichromatiques normalisées xG, yG sont déterminés, B2) une matrice de couleur de luminescence est déterminée à partir des spectres de luminescence des pigments luminescents et des fonctions de valeurs spectrales, notamment des fonctions de valeurs spectrales CIE,
B3) la matrice de couleur de luminescence est inversée pour obtenir une matrice de couleur de luminescence inverse,
et pour chaque lieu de couleur limite
B1') à partir des coordonnées trichromatiques normalisées xG, yG du lieu de couleur limite, des valeurs colorimétriques associées XG', YG', ZG' sont déterminées,
B4') à partir de la matrice de couleur de luminescence inverse et des valeurs colorimétriques déterminées XG', YG', ZG' du lieu de couleur limite, des proportions pondérales relatives associées des au moins deux pigments luminescents sont déterminées,
et ensuite
B5') à partir des proportions pondérales relatives des au moins deux pigments luminescents pour les lieux de couleur limites, une plage pondérale de tolérance est déterminée pour la proportion pondérale relative de chacun des au moins deux pigments luminescents.

7. Procédé de production d'une image en couleurs luminescentes, notamment d'une image en couleurs luminescentes multicolore, dans lequel
• pour une ou plusieurs des couleurs luminescentes apparaissant dans l'image en couleurs luminescentes, un lieu de couleur cible souhaité est prédéfini,
• pour les lieux de couleur cibles prédéfinis, une encre d'impression luminescente est respectivement fabriquée selon un procédé conforme à l'une des revendications 1 à 5, et
• l'image en couleurs luminescentes est imprimée en utilisant les encres d'impression luminescentes fabriquées.

8. Procédé selon la revendication 7, **caractérisé en ce que**
• une image en couleurs de réflexion multicolore est prédéfinie, laquelle présente, sous lumière visible, dans différentes zones partielles, respectivement un effet colorimétrique déterminé par un lieu de couleur, et **en ce que**
• une image en couleurs luminescentes est produite, laquelle reproduit l'effet colorimétrique de l'image en couleurs de réflexion, **en ce que**, pour les différentes zones partielles, le lieu de couleur de la couleur de réflexion sous lumière visible est respectivement prédéfini comme lieu de couleur cible souhaité pour la couleur luminescente.

9. Procédé selon la revendication 8, **caractérisé en ce que** l'image en couleurs de réflexion est imprimée avec des encres d'impression de réflexion et l'image en couleurs luminescentes avec les encres d'impression luminescentes fabriquées sur le même support cible.

10. Procédé selon l'une des revendications 7 à 9, **caractérisé en ce que** l'image en couleurs luminescentes est imprimée sur le support en tant qu'élément de sécurité pour la sécurisation d'un support de données, notamment d'un document de valeur ou d'un document d'identité.

11. Procédé selon les revendications 9 et 10, **caractérisé en ce que** l'image en couleurs de réflexion et l'image en couleurs luminescentes sont imprimées sur le support de données, l'image en couleurs luminescentes montrant, pour la sécurisation du support de données, lors d'un éclairage par une lumière d'excitation, le même motif et produisant la même impression de couleur que l'image en couleurs de réflexion sous lumière visible.

12. Encre d'impression selon un procédé conforme à la revendication 2, dans laquelle la proportion pondérale relative des pigments luminescents pour les couleurs fondamentales rouge, vert, bleu est décrite par un vecteur de dosage c = (cR,cG,cB)T, les composantes du vecteur de dosage cR,cG,cB indiquant les proportions pondérales relatives dans lesquelles les au moins trois pigments luminescents sont mélangés.
